# EUROPEAN PATENT SPECIFICATION

(11) **EP 3 452 959 B1**
(45) Date of publication and mention of the grant of the patent: **25.01.2023**
(21) Application number: 17720668.7
(22) Date of filing: 25.04.2017
(51) Int. Cl.: G06N 3/02, G06N 3/08, G06T 7/00

(54) **MODEL CONSTRUCTION IN A NEURAL NETWORK FOR OBJECT DETECTION**
MODELLKONSTRUKTION IN EINEM NEURONALEN NETZ ZUR OBJEKTDETEKTION
CONSTRUCTION MODÈLE DANS UN RÉSEAU NEURONAL À LA DÉTECTION D'OBJECTS

(30) Priority: 02.05.2016 DK 201670284
(43) Date of publication of application: 13.03.2019
(73) Proprietor: Scopito ApS, 8200 Aarhus N (DK)
(72) Inventor: FALK, Ken, 8600 Silkeborg (DK); PEDERSEN, Jeanette B., 8660 Skanderborg (DK); THORSGAARD, Henrik, 8600 Silkeborg (DK)
(74) Representative: Patrade A/S
(86) International application number: PCT/DK2017/050121
(87) International publication number: WO 2017/190743

(56) References cited:
- US-B1- 6 578 017
- Fisher Yu ET AL: "LSUN: Construction of a Large-scale Image Dataset using Deep Learning with Humans in the Loop", , 10 June 2015 (2015-06-10), XP055332092, Retrieved from the Internet: URL:http://citeseerx.ist.psu.edu/viewdoc/d ownload?doi=10.1.1.715.5178&rep=rep1&type= pdf
- RUSSAKOVSKY OLGA ET AL: "Best of both worlds: Human-machine collaboration for object annotation", 2015 IEEE CONFERENCE ON COMPUTER VISION AND PATTERN RECOGNITION (CVPR), IEEE, 7 June 2015 (2015-06-07), pages 2121-2131, XP032793654, DOI: 10.1109/CVPR.2015.7298824 [retrieved on 2015-10-14]
- JUSTIN CHENG ET AL: "Flock", PROCEEDINGS OF THE 18TH ACM CONFERENCE ON COMPUTER SUPPORTED COOPERATIVE WORK & SOCIAL COMPUTING, CSCW '15, 1 January 2015 (2015-01-01), pages 600-611, XP055334579, New York, New York, USA DOI: 10.1145/2675133.2675214 ISBN: 978-1-4503-2922-4
- INEL OANA ET AL: "CrowdTruth: Machine-Human Computation Framework for Harnessing Disagreement in Gathering Annotated Data", 19 October 2014 (2014-10-19), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 486 - 504, XP047301419, ISSN: 0302-9743 ISBN: 978-3-540-76785-5 page 486 - page 503, paragraph 2
- Liyue Zhao ET AL: "Robust Active Learning Using Crowdsourced Annotations for Activity Recognition", , 1 January 2011 (2011-01-01), XP055143273, Retrieved from the Internet: URL:http://roke.eecs.ucf.edu/pdf/Sukthanka r-HCOMP2011.pdf [retrieved on 2014-09-29]

## Description

### Field of the Invention

The present invention relates to a computer-implemented method for constructing a model in a neural network for object detection in an unprocessed image, where the construction may be performed based on at least one image training batch. The model is constructed by training one or more collective model variables in the neural network to classify the individual annotated objects as a member of an object class. The model in combination with the set of specifications when implemented in a neural network is capable of object detection in an unprocessed image with probability of object detection.

### Background of the Invention

The huge potentials of deep learning, neural networks and cloud infrastructure to efficiently perform complex data analysis become more and more apparent as the amount of data grows and the demand for automated tasks is ever expanding.

Massive research and investments worldwide are going into machine learning and deep convolution neural networks (CNNs). Large companies and research institutions show state-of-the-art solutions where a single neural network can replace very complex algorithms that previously needed to be developed specifically to each use case.

Commercial machine learning image recognition solutions are starting to appear in the market. However, these solutions are using pre-trained models that can identify common object types like persons, cars, dogs or buildings. The problem with CNNs is that it is very complex to prepare data and configure the networks for good training results. Furthermore, very powerful PCs and graphics processing units (GPUs) are required.

Today, complex machine learning technology is still performed and accessed by highly skilled persons to construct pre-trained models. For example, a high level of computer science and deep learning competences are required to annotate, train and configure neural networks to detect custom objects with high precision. In general, the pre-trained models only find use within the narrow field of which it is trained.

One of the main problems is that the implementations of pre-trained models today are done on standardized training data. These standardized training data are limited in both size and application fields and thus, present a problem in terms of expanding the training to developing pre-trained models for other applications. Attempts have been made, especially by researchers in the field of neural networks, to convert neural networks to new domains, however, they often use too few images, due to the very time-consuming task of annotating data.

In general, the implementations of pre-trained models today are a very time-consuming task of training and constructing models and there is a need of specialist knowledge. The setup of the neural networks requires a specialist while the data annotation is very time-consuming and may take weeks or longer.

As one example of a machine learning technology, WO 2016/020391 may be mentioned. WO 2016/020391 discloses a method for training a classifier. The classifier is used in a method for automated analyzing biological images in the field of histology.

The method is based on analyzing the image using a biological image analysis device which is programmed to perform a classifier function. The classification is performed by combining an object feature with a context feature associated with the object feature. The object features may include the size, shape and average intensity of all pixels within the object and the context feature is a characteristic of a group of objects or pixels. In histology the presence, extent, size, shape and other morphological appearances of these structures are important indicators for presence or severity of disease which motivates the need for accurate identification of specific objects. Thus, the disclosed method aims at achieving a high level of specificity of the objects.

For implementing the method, SVMs are used. SVMs are supervised learning models with associated learning algorithms that analyze data and recognize patterns, used for classification and regression analysis. Given a set of training digital images with pixel blobs, each marked for belonging to one of two categories, an SVM training algorithm builds a model that assigns new examples into one category or the other, making it a non-probabilistic binary classifier. An SVM model is a representation of the examples as points in space, mapped so that the examples of the separate classes are divided by a clear gap that is as wide as possible. New examples are then mapped into that same space and predicted to belong to a category based on the side of the gap onto which they fall.

The method for training the classifier disclosed in WO 2016/020391 is based on a three-factor framework where a training set of training digital images are used. The images are analyzed to calculate training context feature values and determine feature values of a particular object feature. The classifier is trained on a single object feature and one or more context features.

During the training phase, the classifier builds a model that inexplicitly specifies the relation between the object feature and one or more of the context features. In one example a training data set consisting of a total of 210 field of view (FOV) images was used wherein negative tumor cells and lymphocytes were manually annotated as the training data. The training data was input to an untrained linear SVM classifier. The example showed that context features have a greater descriptive power than has the object feature alone.

US 2014/0254923 discloses a computer-implemented method of classifying objects in an image. The disclosed method does not rely on context features as does WO 2016/020391, but on individual object detection. The method uses vector description, in order to take account of the rotation and scaling, and the objects in images are classified by a trained object classification process. However, the object classification process is trained through the use of a known training data set of images with known contents.

Another example where SVMs are used is disclosed in the paper "LSUN: Construction of a large-scale image dataset using deep learning with Humans in the Loop" by Fisher Yu et al. which discloses the construction of a large-scale image dataset using a method which includes human annotating. The disclosed method is comparable to active learning. However, the method does not aim at learning a model but aims at using existing pre-trained models to construct a largescale annotated image dataset which can be used to train a model and to verify a trained model. The pre-trained neural network is a commercially available neural network, Alexnet. The pre-trained model comprises pre-trained features which are used for initially grouping the images comprised in the image dataset. In the later steps the object classification and the boundaries defining the object classification and the distinction of or gap between the classifications are refined. The human annotating on a number of images is used for training various SVM-models for achieving an amplification of the preliminary human effort of annotating and thus the refinement of the classification.

To really exploit the huge potentials of machine learning technology and neural networks to efficiently perform complex data analysis, solutions for simplified procedures are needed. Solutions, which include pre-trained generic models to be used on a wide range of structures and infrastructure inspections, solutions, which allow for non-technical people to train models in CNN's and to use these constructed models to analyse their data, and solutions, which leverage the strengths of cloud infrastructure and CNNs to create a single scalable solution which can work in many different inspection domains.

At the same time image recording have become easy at an unprecedented scale and quality. The recording or collection may also be performed by unmanned airborne vehicles such as drones. Collections of images from a drone inspection include a vast or big amount of data and have shown to introduce accuracy issues when training for or applying neural networks to image recognition.

### Object of the Invention

It is an objective to overcome one or more of the before mentioned shortcomings of the prior art.

### Description of the Invention

The invention is achieved by a computer-implemented method for constructing a model in a neural network for object detection in an unprocessed image according to claim 1, where the construction may be performed based on at least one image training batch. The method comprises an act of providing a neural network configured with a set of specifications, an act of establishing at least one image training batch, which batch comprises at least one training image comprising one or more objects where an individual object is a member of an object class, and an act of providing a graphical user interface (GUI) configured for displaying a training image from the image training batch. Further, the method comprises an act of iteratively performing following acts: an act of annotating object(s) in the training image by user interaction generating individually annotated object(s), another act of associating an annotation with an object class for the annotated object in the training image by user interaction. Another act of returning a user annotated image training dataset comprising the training image with annotated object(s), each individual annotated object associated with an object class. And yet another act of constructing a model by training one or more collective model variables in the neural network to classify the individual annotated object(s) as a member of an object class. The model in combination with the set of specifications when implemented in a neural network is capable of object detection in an unprocessed image with probability of object detection.

The neural network may be a convolutional neural network (CNN), regional neural network (R-NN), regional convolutional neural network (R-CNN), fast R-CNN, fully segmented CNN or any similar structure. The neural network may be implemented in different frameworks, as examples, but not limited to these, may be mentioned commercial frameworks such as Tensorflow, Theano, Caffe, or Torch.

The specifications of the neural network may for example include specification on datatypes, learning rate, step size, number of iterations, momentum, number and structures of layers, layer configurations such as activation functions (relu, sigmoid, tanh), pooling, number of convolutional layers, size of convolutional filters, number of fully connected layers, size of fully connected layers, number of outputs (output classes), and classification functions. Furthermore, the specifications may include information on the depth of the network, and structures for the set-up of the neural network. The neural network may be configured with different or additional specifications and thus is by no means limited to the mentioned examples. The wide range of specifications may often be reused and many neural networks are already configured with a set of specifications, as examples may be mentioned commercially available Alexnet or VGG, which specify a range of the above-mentioned specifications. A person skilled in the art will know how to use already established neural networks configured with a set of specifications, adapt or set-up the specifications of already established neural networks or may even set-up a neural network with a set of specifications.

Image may refer to any multi-dimensional representation of data points recorded by a sensor, orthomosaics or other multi-dimensional representation of data points. This may for example include radar images, scanning images from an electron microscope or a MR-scanner, optical images, thermal images, point cloud, acoustic data recording, or seismic recordings. This is just a few examples of images and thus the scope of the invention is by no means limited to the mentioned examples.

The iteratively performed acts may only be performed if the image provides for the specific act. In case the image training batch comprises a blank training image or a training image comprising no relevant objects to be annotated, the act(s) related to annotating an object may be omitted.

Object detection in an image comprises both object recognition and localization of the object. Object recognition may also be perceived as object classification.

The object detection may for example be used for mapping or surveying infrastructure where object detection may be actual image objects, temperature changes in thermal images, or specific frequency scales on acoustic images. The object detection may for example comprise common occurring objects, rarely occurring objects or a combination. Again, it should be mentioned that these are only a limited number of examples, and the scope of the invention is by no means limited to these.

Probability of object detection refers to the possibility of object detection on an image by the network and the possibility of that object belonging to an object class, whereas accuracy refers to how accurate the network actually is when determining an object and object class where the predictions of the network are tested on an image verification batch.

In one aspect the accuracy of object detection may describe the circumstance that the user sets a threshold in the program. If the marked object is above this threshold, the neural network will suggest this object class to be associated with the marked object.

One effect of the embodiment is that the data used for training the collective model variables in the neural network, for construction models to classify the individual annotated objects as a member of an object class, only comprises a training image data batch, annotation of relevant objects, and associated object classes. Thus, the provided data preparation does not require a high level of computer science and deep learning competences, which has the advantage that the training may be performed by non-skilled persons within computer science and deep learning. The persons performing the training only need the skills of recognizing relevant objects on the images.

Another effect of the embodiment is that the training may be performed on a wide range of objects with the advantage that collective model variables may be trained for constructing models for a wide range of object detection. Thus, this embodiment is advantageous in regard to constructing models for object detection for work in many different inspection domains. Furthermore, it is advantageous in regard to constructing models for obj ect detection with a high degree of invariance, for example in order to specifically outline the objects, size, scale, rotation, colour or the like. The invariance may encompass a number of features and is by no means limited to the examples mentioned here.

Thus, according to the above, the training may encompass one model for detection of one or more objects or multiple models, each model constructed for detection of one or more objects.

Yet another effect of the embodiment is that the training may be performed for object detection with a given accuracy. The advantage is that the training may be completed with an accuracy of obj ect detection evaluated to be sufficient for the given task, thereby limiting the training effort and time to a minimum. This may also be advantageous in regard to the fact that the level of training may be accustomed to the complexity of the object detection.

An additional effect of the embodiment is that the training may be performed using an image training batch, which comprises training images with multiple objects, where each individual object belongs to different object classes. One advantage of this may be that multiple models for individual object classes may be constructed in one training process, thereby limiting the training effort and time to a minimum. The multiple models may for example be used as one comprehensive model for multiple object detection on a wide range of structures and infrastructure inspections, or a single model may be separated out for more focused object detection on a single structure in very specific infrastructure inspections.

Yet an additional effect of the embodiment is that the training may be performed by multiple users on either multiple image training batches, or on one image training batch with the advantage of leveraging the strengths of cloud infrastructure and CNNs to construct a model with limited training effort and time consumption for each user.

In case of training with several users it may be preferable to incorporate history on the user interactions and appoint different user levels, where the user level is associated with a hierocracy for object annotation and object classification.

The effect of multiple users may be that the training may be divided into more users. Furthermore, more users may provide for a more diverse image training batch, if each user contributes with different images. Furthermore, a more comprehensive image training batch may be established if more users contribute with their own images. This may be advantageous in regard to reduced time-consumption for the individual user, improved accuracy of object detection and thus constructing more accurate models.

One object of the invention may be achieved by the computer-implemented method comprising a further act of iteratively performing following acts, where one act comprises displaying a training image comprising one or more machine marked objects associated with a machine performed classification of the one or more individual objects, another act comprises changing the machine object marking, the machine object classification or both, and yet another act comprises evaluating the level of training of the collective model variables for terminating the training of the model.

Annotation is used in relation to an action performed by user interaction through the graphical user interface while marking is used in relation to an action performed by the neural network based on the constructed model.

One effect of this embodiment may be that the collective model variables are continuously trained in the iterative performed acts and that the constructed model is improved accordingly after each performed iteration. This is advantageous in regard to continuously evaluating the level of training such that the training can be terminated once an appropriate accuracy of object detection is reached, thereby limiting training effort and time consumption of excessive training.

The iterative training may have the further effect that correct performed markings may simply be accepted and thus less and less annotations have to be performed as the training proceeds. As the training proceeds, the annotations may be limited to be performed on images with new information, different viewpoints or objects within the same class but with features not seen on the previous images. The iterative training may therefore present the advantage that the time consumed for training is reduced by factors of time.

Another effect of the embodiment may be that object marking and object classification can be changed to correct the training of the collective model variables. This may be advantageous in regard to continuously adjusting the training.

The model may also include collective variables for the part or parts of the images not comprising objects, which may be referred to as background. The iterative act of annotating may thus include annotating sections of the background and associating this or these annotations with an applicable object class, for example "background", "other", "non-applicable", "non-object" or other creatively named classes. The annotation of the background may comprise small sections of the image background, a complete image or the remaining part of the image surrounding other annotated objects. The effect of annotating sections comprising background and classifying this is to establish segregation between background and other objects, the relevant objects to be detected. It is important to obtain a broad diversity in the annotated sections of background to improve the accuracy of segregation between background and other objects and thus the probability and accuracy of object detection.

Based on performed experiments the best results are obtained by annotating small sections of the image background in combination with annotating complete images without any relevant objects. However, all of the above described methods, alone or in combination, may still be applicable with good results.

One object of the invention is achieved by the computer-implemented method wherein the acts of annotating, associating and returning are performed iteratively before subsequently performing the act of constructing.

One effect of this embodiment may be that the user interaction may be performed on a sub-batch of training images without waiting for the act of construction to be performed between each image. By postponing the act of construction and collecting the act of constructing for the entire sub-batch, the user may earn the advantages of a concentrated work effort on the sub-batch and consecutive time for performing other tasks while the act of constructing is performed.

The computer-implemented method of the invention comprises a further act of performing intelligent augmentation.

Data augmentation is the art of changing the image of an object without changing the object class, regardless of localization in the image. This means that it is the same object no matter if the object is lighter or darker than before, whether it is rotated or not, whether it is flipped or not, to mention a few examples. Common practice, to reduce the number of training data required for training one or more collective model variables in the neural network is to adapt the present image training set to simulate different images. This means that one image of an object may be expanded to multiple images of the same object but imaged with different variations - the number of new images may be as many as 500 or more. By intelligent augmentation is meant that only the relevant changes to an image of an object are considered. Thus, the purpose of intelligent augmentation is to use data augmentation in an intelligent way to reduce the complexity of the neural network. For example, if a rotation of an imaged object never occurs in real images, it will take up complexity in the neural network and may never be used. This means that some weights will be reserved for this information and thereby cannot be used for something else that might be more relevant, which may cost accuracy.

Thus, the intelligent augmentation incorporated in this embodiment provides for processing the image for better accuracy of object detection. This processing may include scaling of the images, rotation of the images based on annotations and associating annotations and object classes. The annotation may be performed on objects of different sizes or displayed in different angles, which is exactly what may be used in intelligent augmentation for more accurate object detection.

One object of the invention may be achieved by the computer-implemented method comprising a further act of establishing at least one image verification batch.

Establishing an image verification batch may have the effect of evaluating the accuracy of the constructed model. The image verification batch is not used for training but only to test the constructed model. This may be advantageous in comparing a previous reached training level with a subsequent model constructed after further training.

Furthermore, from the verification batch and the accuracy by which the object detection is performed, the accuracy may be used in itself to establish if the model has the sufficient accuracy. Thereby it is possible to evaluate whether the model should be changed, more training data should be provided, or the accuracy may be reached using a simpler model. The advantage of using for example a simpler model is that less memory is required, and thus less disk space and less training data may be required.

One object may be achieved by the computer-implemented method comprising a further act of evaluating the constructed model or the use of the neural network specifications for reducing complexity of the model, reducing the specifications or both.

An effect of this may be that a simpler model or a simpler neural network may be used for training the collective model variables. This may be advantageous in regard to reduced processing time. Another advantage may be that the required PC capacity may be reduced. Yet another advantage may be that less powerful graphic processing units (GPUs) may be used. This initiates using cheaper hardware elements and thus reduces costs for training or object recognition, or both.

As previous mentioned, the advantage of using for example a simpler model is that less memory is required, and thus less disk space and less training data may be required.

One object of the invention may be achieved by the computer-implemented method comprising a further act of evaluating the accuracy of object detection for reducing the image training batch.

The effect of reducing the image training batch is that the training effort and time spent by the user may be reduced resulting in reduced costs for training.

In another aspect the image training batch may be reduced by omitting cluttered, shaken or blurred images. Including these images may harm the training with reduced accuracy as a result. Alternatively, the relevant objects in such images may be pruned and thus still be used in the image training batch, which may have the advantage of widening the object recognition and thus increasing the accuracy of object detection.

One object of the invention may be achieved by the computer-implemented method wherein annotating an object is performed by an area-selection of the training image comprising the object or pixel-segmentation of the object.

One effect of this embodiment is that common practice of annotating objects may be used with the advantage of facilitating that the computer-implemented method may be implemented on a wide range of neural networks.

One object of the invention may be achieved by the computer-implemented method wherein annotating an object is performed using a computer-implemented annotation tool configured with a zoom-function. The computer-implemented annotation tool is configured for providing an area-selection interface for area-selection of an object in the training image by user interaction, which area-selection is adjustable, configured for providing a pixel-segmentation interface for pixel-segmentation of an object in the training image by user interaction, which pixel-segmentation is configured to pre-segment pixels by grouping pixels similar to a small selection of pixels chosen by user interaction, or configured for both. Furthermore, the annotation tool is configured to transform annotation from pixel-segmentation of an object into area-selection of the object in the training image.

The zoom-function has the effect that more precise annotations may be performed comprising a minimum of background with the advantage of accurate object detection.

The adjustable area-selection provides for the same effect and advantage as the zoom-function.

One effect of the fact that the pixel-segmentation in this embodiment is configured to pre-segment pixels is that only a small selection of pixels may be chosen by user interaction, after which the computer-implemented annotation tool pre-segments pixels by grouping pixels similar to the small selection of pixels chosen by user interaction. Thus, each pixel comprised in the object does not have to be selected by the user which may be a tedious and unprecise process.

Another effect of the embodiment, as the annotation tool is configured to transform annotation from pixel-segmentation of an object into area-selection of the object in the training image is, that the annotation may be saved to other formats of neural networks and may thus be used independent of the format or type of the neural networks.

One object of the invention may be achieved by the computer-implemented method wherein the computer-implemented annotation tool further provides for colour overlay annotation, which colour is associated with an object classification and which object classification is associated with the annotation, provides for re-classification of one or more individual annotated objects, machine marked objects or a combination of both, or provides for both. Furthermore, the annotation tool is configured to show all annotations and machine marks associated with an object class in one or more training images.

One effect of this embodiment is that the associated classes are easily identified due to the colour overlay. Typically, there will be several types of object classes on the same image which is especially advantageous to easily identify the different associated class and thereby identify erroneously annotations or classifications. The embodiment has the further effect that erroneously annotations or classifications may be corrected immediately.

Another effect of this embodiment is that when all annotation, marking and associated object classes are shown, it provides for easy correction of mistakes with the advantage of optimizing the training.

One object of the invention may be achieved by the computer-implemented method wherein the computer-implemented annotation tool further provides for history of the performed annotation.

In case of training with several users this embodiment may have the effect that annotations performed by super-users may not be overwritten by less experienced users, which may be advantageous in regard to achieving a high level of training. A further effect is that the user may see his/her own annotation history which may be advantageous in regard to improving his/her own skills.

Another effect of this may be that the history comprises relevant information on whether an object is originally annotated by a human or if it is originally marked by the neural network. Even if the annotation or marking is accepted, there might be issues with the precision of edges. The user might be inclined to accept an imprecise but correct result from the neural network compared to if the user had to make the annotation. This may present inaccuracies in the training if not corrected. Thus, for an experienced user this may be discovered when consulting the history on the annotations/markings and be corrected to restore or improve the accuracy in the training.

In one aspect the computer-implemented annotation tool may comprise a function to rotate a marking or an annotation. Rotated marking or an annotation provides for selecting objects that are inclined, without getting too much background. Thereby, achieving markings/annotations with a better fit for selection so that the training becomes more precise.

In another aspect the computer-implemented annotation tool may comprise a function to move an area-selection to a new object, and thereby avoid redrawing the annotation box if the new object has the same properties.

In yet another aspect the computer-implemented annotation tool may comprise a function to repeat an area-selection. If multiple objects appear in an image, this function can repeat the area-selection to the next object, thereby avoiding redrawing the annotation box if the next object has the same properties.

In yet another aspect the computer-implemented annotation tool may comprise a one-key-function for saving the image including annotation and object classes and which function provides unique identifiers for the image dataset to be saved. Thereby overwriting existing data is avoided and time consumption is reduced. Furthermore, the user does not have to remember the sequence of names as the function may keep track of these.

One object of the invention may be achieved by the computer-implemented method wherein navigation in the image training batch is performed using a computer-implemented navigation tool providing for navigation by image management, and providing for status on progression of evaluating the image training batch.

One effect of this embodiment may be that the user may be motivated by following the progress, with the advantage of keeping the user alert, and thereby avoid erroneously annotations or wrong object classes associated with the annotations.

Another effect may be that the user may gain a better overview of the image training batch and may skim through the training images, thereby only focusing on images with relevant objects. This may have the advantage of keeping the user alert to avoid mistakes and furthermore limit the training effort and time consumption provided by the user for the training.

One object of the invention may be achieved by a computer-implemented method in a neural network for object detection in an unprocessed image with probability of object detection. The method comprises an act of providing a constructed model to a neural network configured with a set of specifications, an act of establishing at least one unprocessed image batch, which batch comprises at least one unprocessed image to be subject for object detection, an act of providing a graphical user interface (GUI) configured for displaying one or more unprocessed images with a set of marked objects, each individual marked object associated with an object class, an act of performing object detection in an unprocessed image, and an act of returning the unprocessed image with a set of marked objects, each individual marked object associated with an object class.

One effect of this embodiment is that the huge potential of machine learning technology and neural networks to efficiently perform complex data analysis may be utilised by non-skilled persons within computer science. This is advantageous in regard to allowing non-skilled persons within computer science to use constructed models in neural networks to analyse their data which may provide of reduced time and cost. The reduction in cost and time may be both in regard to hardware requirements and in labour.

One object of the invention may be achieved by a computer-implemented method in a neural network for object detection comprising a further act of providing access to a neural network for further training one or more collective model variables of the model, such that the model is subject to improved accuracy of object detection.

One effect of this embodiment is that the model may be continuously improved or updated. This is advantageous if objects with new features appear on the markings which objects belong to an already existing object class. In this case the model may be trained to include this object without training a new model.

### Examples of user cases:

### Case 1:

A user has made an inspection resulting in 1000 images and would like to set up a new model to detect one class of objects, in this case insulators. Thus, the image training set comprises 1000 images.

The user selects an existing neural network comprising a set of specifications. The user then specifies the relevant number of object classes, in this case two classes: insulators and background. Furthermore, the user specifies that annotation is performed by pixel-segmentation.

The user then looks through the first 10 training images and chooses a small selection of pixels where after the annotation-tool through pre-segmenting pixels in the image performs the complete pixel-segmentation.

After annotation of the first 10 images the first process of training the collective model variables is performed and a model is constructed. The model is then able to give suggested markings for the remaining 990 images.

The user looks through the next 40 images. On 30 images the objects are marked correctly and thus, the user accepts these without changing the markings or the classifications. On 10 images the objects are not marked correctly so these are corrected.

Now, a second process of training the collective model variables is performed and an updated model is constructed. The model is improved by the second process and with an improved accuracy of object detection.

As the model is improved the user now looks through the next 100 images. This time only 10 of the images comprise incorrect markings. The markings on the other 90 images are correct and accepted.

Accepting an image is a one button click and the program automatically goes to the next image. As the user reaches image no. 500 this image and the next 100 images do not comprise any relevant objects (insulators) for this case. The user goes to navigation thumbnail view where the current image is highlighted and scrolls through the next 100 images down to image no. 600 - the next image whereon insulators again appear. The user then chooses this picture through the user interface by clicking on that image, after which the user continues accepting or correcting markings.

In between the user may optionally stop to train the model so the markings get iteratively better. The user may stop after completing the 1000 images an updated model is constructed - for this case the "first version" model.

Before continuing, the user now initiates a new training on the same 1000 images starting with the constructed "first version" model. This time the training is done with a higher number of iterations. This extends the training time but is done to improve the accuracy of the model. After completing the 1000 images the further updated model is constructed - for this case the "second version" model.

A second user is also interested in insulators but wants to distinguish between glass insulators and ceramic insulators. The user therefore specifies two new classes: "Insulator, glass" and "Insulator, ceramic".

The second user benefits from the fact that a large image training batch has already been used to construct a model for object detection on insulators. The second user now loads the previously annotated training set and in the thumbnail view the user can now see all markings of insulators. For each insulator the second user can now, through the user interface, simply click on each marking and change the object class to any of the two newly specified classes. The second user does not have to do the marking again, and furthermore does not have to look through the images without insulators. The second user may now finish the training by constructing the new updated model - for this case the "third version" model.

A third user just wants to know if an insulator is comprised in an unprocessed image batch or not. This user is not interested in knowing exactly which pixels image the insulator contains. This user specifies that area-selection shall be used. This user - just as the second user - benefits from the fact that a large image training batch has already been used to construct a "first version" model for object detection on insulators. Furthermore, this user - again just as the second user - now loads the previously annotated training set and the neural network converts the pixel-segmented insulators to area-selected insulators using intelligent data augmentation for this type of neural network. The third user may now finish the training by constructing yet another new updated model - for this case the "fourth version" model.

An objective may be achieved by use of a computer-implemented method for constructing a model in a neural network as outlined and where images are collected by use of by use of an airborne vehicle such as a drone.

In particular unmanned airborne vehicles such as drones may be used for inspection of areas or infrastructure. Drones have proven a valuable tool carrying image recording devices to places not hereto accessible. Likewise, drones have proven capable of positioning image recording devices in a breath of angles, distances etc. of subjects. Furthermore, drones have proven capable of tracking paths of structures or infrastructure and of being capable of collecting vast amounts of images during operation.

In practice drone operators and inspectors will aim to collect as many images as possible during a flight that is often planned in detail and must be performed taking limited flight time into account.

Thus, an image batch from a drone flight comprises a vast amount of images often from different - or slightly different - angles of a subject or often similar subjects from different locations along a flight path. Another problem with such series or collection of images is that the drone inspection result in images taken from a perspective hereto unseen by human inspection.

The disclosed method has shown to overcome issues with training or construction of models and to enable management of the big data collected.

Likewise, a computer-implemented method in a neural network for object detection as disclosed and wherein an unprocessed image or a batch of images is obtained from a drone flight has shown to be more accurate than hereto.

### Further aspects to case 1:

The users may choose that 20% of the images are reserved for an image verification batch and thus, the remaining 80% of the images comprise the image training batch. The image verification batch may be used to test the accuracy of the constructed model.

Through the training of the collective model variables and as the intermediate models are constructed, the accuracy of an intermediate model may be tested by use of the verification batch. Thereby the accuracy of the model may be made available to the user. Furthermore, the neural network may suggest whether the model should be further improved or if simplifications may be done to the training.

As a further training of both the "third version" and the "fourth version" model the respective second and third user may add and annotate new images with imaged insulators. These imaged insulators could be previously known insulators or a new class unknown to the system.

### Case 2:

A user loads a satellite image map of Greenland. The user marks polar bears x number of times. The system can now detect polar bear locations and the total number of polar bears.

### Case 3:

A user adds one or more thermal images of central heating pipes for a given area. The user specifies 5 classes each representing the severity of a leak. After marking these classes, the system can now identify leaks with a 1-5 severity degree. In this case the invention is used for object detection of objects where the object classes consist of fault classes.

### Case 4:

Whenever the training of the collective model variables is completed and thus, a constructed model is completed, the neural network evaluates if the completed model should be made available to other users. The evaluation criteria could for example be user ranking, model accuracy, and the number of images in the verification batch, hence the number of images which are used to determine the accuracy.

### Description of the Drawing

Figure 1 illustrates one embodiment of the computer-implemented method for constructing a model in a neural network for object detection in an unprocessed image.
Figure 2 illustrates one embodiment of constructing a model in a neural network for object detection in an unprocessed image.
Figure 3 illustrates one embodiment of the computer-implemented method for constructing a model in a neural network for object detection in an unprocessed image.
Figure 4 illustrates one embodiment of the computer-implemented method for constructing a model in a neural network for object detection in an unprocessed image.
Figure 5 illustrates one embodiment of the computer-implemented method for constructing a model in a neural network for object detection in an unprocessed image.
Figure 6 illustrates a training image.
Figure 7 illustrates area-segmentation (7A) and pixel-segmentation (7B and 7C).
Figure 8 illustrates one embodiment of the computer-implemented annotation tool.
Figure 9 illustrates one embodiment of intelligent data augmentation.
Figure 10 illustrates one embodiment of the computer-implemented navigation tool.
Figure 11 illustrates one embodiment of the computer-implemented method in a neural network for object detection in an unprocessed image.

### Detailed Description of the Invention

| No. | Item |
|---|---|
| 10 | Neural network |
| 12 | Specifications |
| 14 | Collective model variables |
| 16 | Trained collective model variables |
| 18 | Image dataset |
| 20 | Model |
| 22 | Machine-mark |
| 24 | Annotation |
| 26 | Pixel-segmentation |
| 28 | Area-selection |
| 30 | Navigation |
| 40 | Object detection |
| 42 | Probability |
| 43 | Accuracy |
| 50 | Unprocessed image |
| 52 | Unprocessed image batch |
| 60 | Image training batch |
| 62 | User annotated image training dataset |
| 66 | Training image |
| 68 | Image verification batch |
| 70 | Object |
| 72 | User annotated object |
| 74 | Machine marked object |
| 80 | Graphical user interface (GUI) |
| 82 | User interaction |
| 90 | Object class |
| 92 | User classified object |
| 94 | Machine classified object |
| 96 | Re-classification |
| 100 | Computer-implemented method for constructing |
| 102 | Constructing |
| 104 | Providing |
| 106 | Establishing |
| 108 | Performing |
| 110 | Annotating |
| 112 | Associating |
| 114 | Returning |
| 116 | Training |
| 118 | Classifying |
| 120 | Displaying |
| 122 | Marking |
| 124 | Evaluating |
| 126 | Terminating |
| 128 | Reducing |
| 130 | Changing |
| 140 | Intelligent augmentation |
| 160 | Computer-implemented annotation tool |
| 162 | Zoom-function |
| 164 | Area-selection interface |
| 166 | Adjustable |
| 168 | Pixel-segmentation interface |
| 170 | Pre-segment |
| 172 | Pixel |
| 174 | Colour overlay annotation |
| 180 | History |
| 190 | Computer-implemented navigation tool |
| 192 | Image management |
| 194 | Status |
| 196 | Progression |
| 200 | Computer-implemented method for object detection |

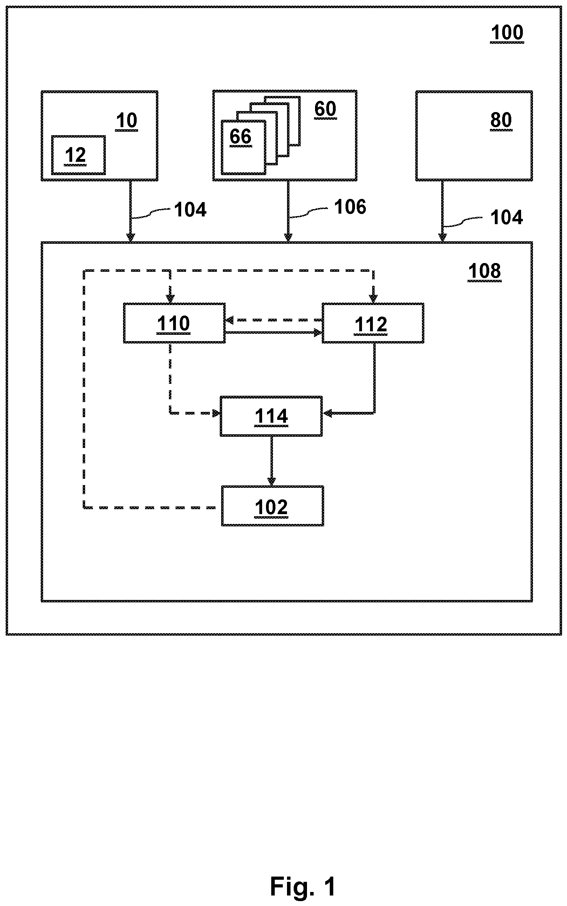

Figure 1 illustrates one embodiment of the computer-implemented method (100) for constructing (102) a model (20) in a neural network (10) for object detection (40) in an unprocessed image (50). The method comprises the acts of providing (104) a neural network (10) and a GUI (80). Furthermore, an image training batch (60) comprising training images (66) is established (106) in this embodiment. The neural network (10) is configured with a set of specifications (12). These specifications may comprise, amongst other, information on number of layers and collective model variables. The GUI (80) may be configured for displaying a training image (66) and for displaying user interactions (82) such as annotated objects and object classes.

The computer-implemented method (100) further comprises acts which may be iteratively performed (108). These acts include annotating (110) objects (70) on the training images (66) and associating (112) each annotation with an object class (90). The acts of annotating (110) and associating (112) may be performed in any preferred order, such that an object may be annotated after which an object class is associated with the object annotation, or an object may be associated with an object class after which the object is annotated. The iteratively performed acts further illustrated in the embodiment includes returning (114) a user annotated image training dataset, which training dataset comprises the training image and annotated object with an associated object class if relevant objects are present on the image, and constructing (102) one or more models.

The broken lines illustrate that the act of annotation (110) and associating (112) may be interchanged, as already described. Furthermore, the broken line illustrates that the acts may be performed in an iterative process, where the model construction receives additional input for each performed iteration. The embodiment may comprise only a single iteration of acts and thus each act may only be performed once. Furthermore, each iteration may only comprise some of the acts. For example, if no relevant objects are present on the image, no act of annotating (110) and associating (112) of object class will be performed.

After completing the image training batch (60) a trained model (20) is constructed (102).

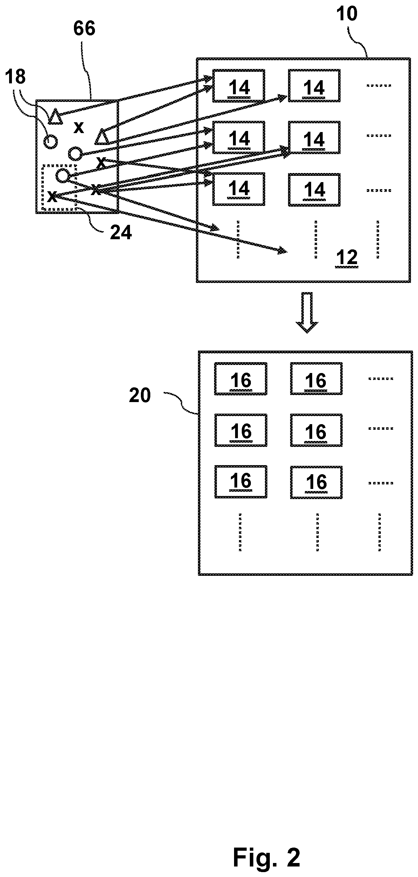

Figure 2 illustrates one embodiment of constructing a model (20) in a neural network (10) for object detection in an unprocessed image. A training image (66) may be described in an image dataset (18), here illustrated by triangles, crosses and circles. The image dataset is interpreted by the collective model variables in the neural network (10). The training image (66) may comprise an annotation (24) and thus part of the image dataset may be interpreted as annotated data. The constructed model (20) comprises the trained collective model variables (16) resulting from the process of interpreting image datasets by the collective model variables (14) in the neural network (10).

The constructed model (20) further comprises the set of specifications (12) with which the neural network (10) is configured.

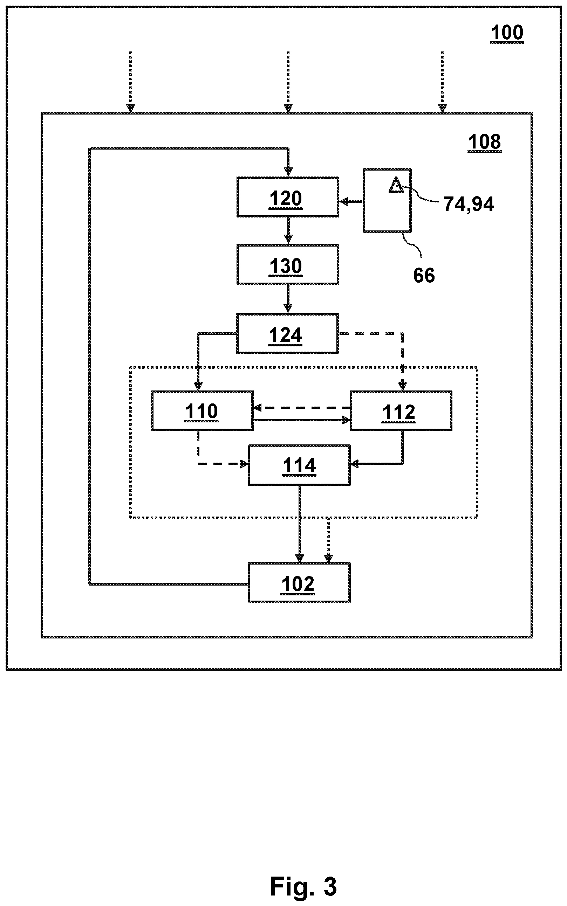

Figure 3 illustrates one embodiment of a computer-implemented method (100) for constructing (102) a model (20) in a neural network (10) for object detection in an unprocessed image. The illustrated embodiment comprises a method according to figure 1 but with additional acts. The dotted lines refer to acts already described in figure 1. The embodiment illustrates the further acts which may be performed after a model is constructed (102) and therefore the dotted arrow pointing to the act of constructing (102) a model is where the iterative performed acts continue from the acts illustrated in figure 1.

The model may be constructed on basis of a single training image (66). Thus, once a model is constructed (102) the computer-implemented method (100) may comprise the following described acts which may be iteratively performed along with the iteratively performed acts described in figure 1 of annotating (110), associating (112) and returning (114).

These acts may comprise displaying a training image (66) from the image training batch (60), which training image may comprise a machine marked object (74) and the associated object classification (94) performed using the constructed model. If the machine marking or classification or both are incorrect this may have to be corrected and thus, an act of changing (130) the object marking, classification, or both may be performed by user interaction. If no changing (130) is performed an act of evaluating (124) the level of training may be performed. If no changes (130) are performed and furthermore no relevant objects are found to be unmarked, unclassified or both the level of training may be evaluated (124) as sufficient and the training may be terminated with the constructed model (102) as a result.

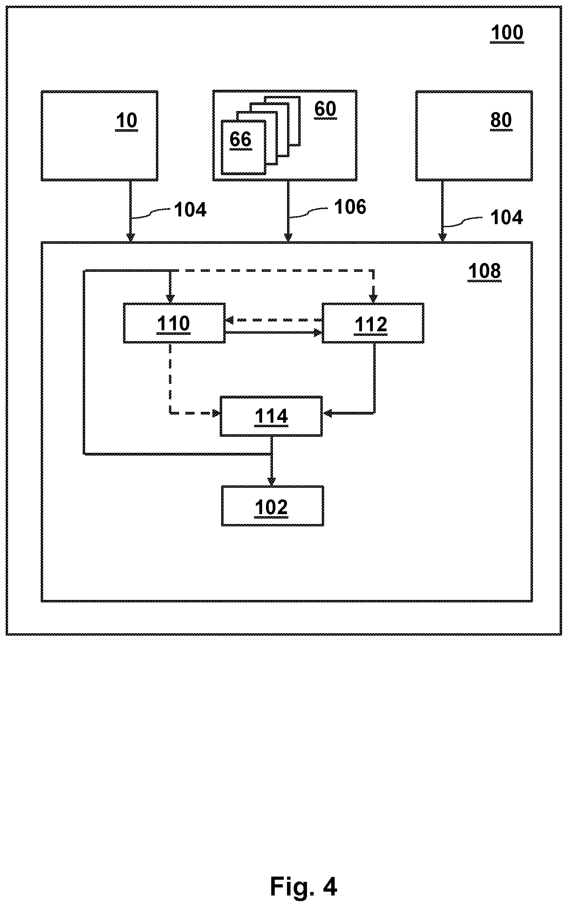

Figure 4 illustrates one embodiment of the computer-implemented method (100) for constructing (102) a model (20) in a neural network (10) for object detection (40) in an unprocessed image (50).

In line with the embodiment illustrated in figure 1, the method comprises the acts of providing (104) a neural network (10) and a GUI (80). Furthermore, an image training batch (60) comprising training images (60) is established in this embodiment. The neural network (10) is configured with a set of specifications (12). These specifications may comprise, amongst other, information on number of layers and collective model variables. The GUI (80) may be configured for displaying a training image (66) and for displaying user interactions (82) such as annotated objects and object classes.

The computer-implemented method (100) further comprises acts which may be iteratively performed (108). These acts include annotating (110) objects (70) on the training images (66) and associating (112) each annotation with an object class (90). The acts of annotating (110) and associating (112) may be performed in any preferred order, such that an object may be annotated after which an object class is associated with the object annotation, or an object may be associated with an object class after which the object is annotated. The iteratively performed acts further includes returning (114) a user annotated image training dataset, which training dataset comprises the training image and annotated object with associated object classes if relevant objects are present on the image.

This embodiment differs from the embodiment in figure 1 as the acts of annotating (110), associating (112) and returning (114) may be performed (108) iteratively before subsequently performing (108) the act of constructing (102).

An alternative embodiment of the illustrated method may comprise that two iterative processes are performed. An inner iterative process comprising the acts of annotating (110), associating (112) and returning (114) may be performed (108) iteratively before subsequently performing (108) an outer iterative process wherein the further act of constructing (102) is performed.

The broken lines illustrate that the act of annotation (110) and associating (112) may be interchanged, as already described. Furthermore, the broken line illustrates that the acts may be performed in an iterative process, where the model construction receives additional input for each performed iteration. The embodiment may comprise only a single iteration of acts and thus each act may only be performed once. Furthermore, each iteration may only comprise some of the acts. For example, if no relevant objects are present on the image, no act of annotating (110) and associating (112) of object class will be performed.

After completing the image training batch (60) a trained model (20) is constructed (102).

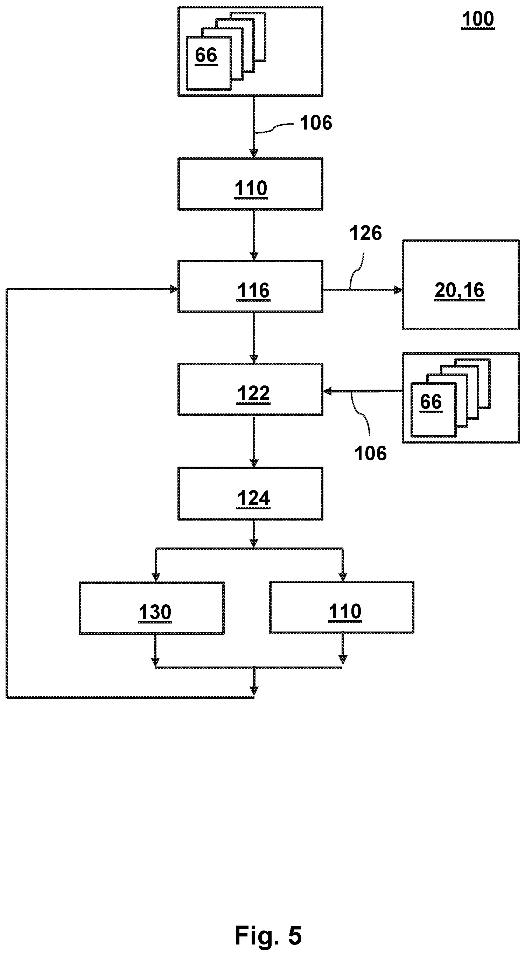

Figure 5 illustrates another embodiment of a computer-implemented method (100) for constructing a model (20) in a neural network for object detection in an unprocessed image. The method comprises the acts of providing (104) a neural network (10) and a GUI (80) not illustrated. Furthermore, an image training batch (60) comprising training images (66) is established (106) in this embodiment. In this embodiment annotating (110) of objects is performed in a first sub-batch of the image training batch (60). Based on the annotated images the collective model variables are trained (116) in the neural network for constructing a model (20). Subsequently a second sub-batch of the remaining image training batch is established (106) and the constructed model is used for marking (122) objects in the second sub-batch. After the machine performed marking (122) these markings are evaluated (124) by user interaction. This evaluation of the second sub-batch may lead to changing (130) of the machine marking, additional annotation (110) of objects or both. Depending on whether the evaluation (124) of the machine marking gives reasons for changing (130) object markings or annotating (110) additional objects, the collective model variables may be further trained (116) either by confirming that the object marking (122) is correct or by performed changes and/or additional annotations.

If the model is evaluated to be trained further, a third sub-batch of images may be established and another iteration, starting with marking (122) objects using the updated constructed model, may be performed.

If the collective model variables are evaluated as being sufficiently trained, the method may be terminated (126) and the trained collective model variables (16) comprises the constructed model (20) for subsequent use in a neural network for object detection in an unprocessed image.

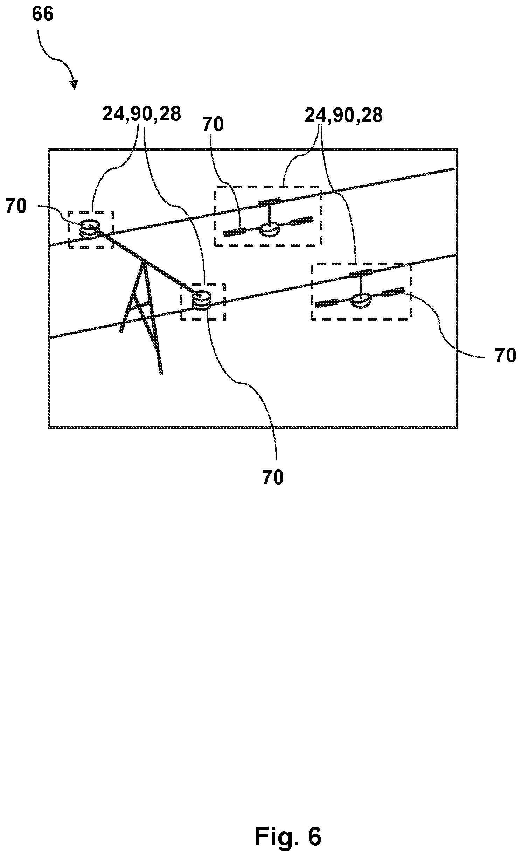

In figure 6 a training image (66) is illustrated on which different objects (70) are annotated (24) and associated with an object class (90). The objects (70) are annotated (24) using area-selection (28). The example on the training image concerns high voltage cable systems. The annotated objects are two vibration absorbers and two insulators. All four objects (70) are individually annotated (24) and associated with an object class (90). Other objects that could be relevant in other connections could for example be the cables or the mast, which should then have been annotated (24) as objects and associated with an object class (90).

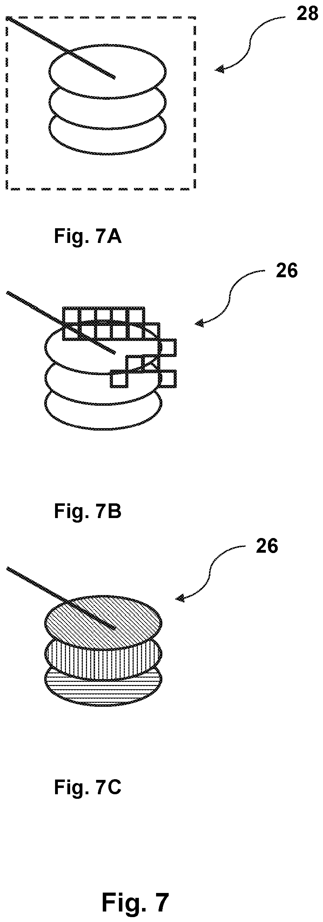

Figure 7 illustrates two different approaches for annotation of objects: area-selection (28) and pixel-segmentation (26). For the illustrated embodiments an insulator is used as the object for exemplary purpose. The computer-implemented annotation tool provides for both kinds of annotation and may be used in both cases. However, other appropriate annotations tools may also be used.

In figure 7A area-selection (28) is illustrated. Area-selection is performed simply by framing the object, as illustrated by the broken line. Pixel-segmentation (26) is illustrated in figures 7B and 7C. Pixel-segmentation (26) is performed by choosing the pixels constituting the imaged object or a small selection of the pixels constituting a small part of the imaged object. From the selected pixels the annotation tool locates the boundaries of the object. Thus, the object is annotated by the located boundaries as illustrated in figure 7C by the patterned areas.

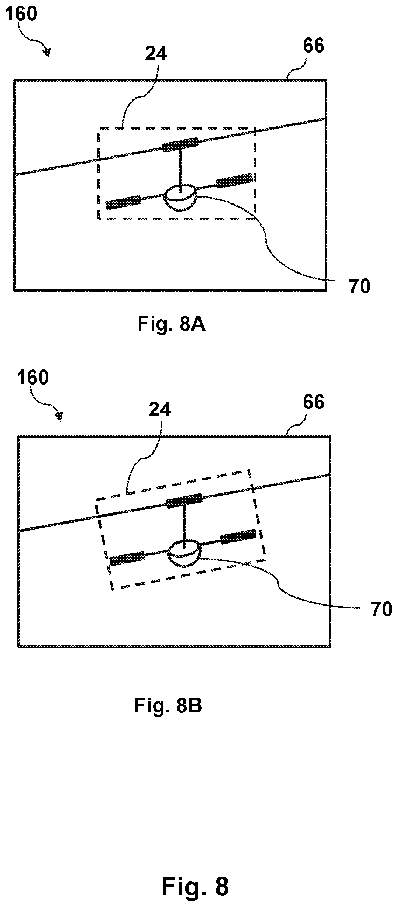

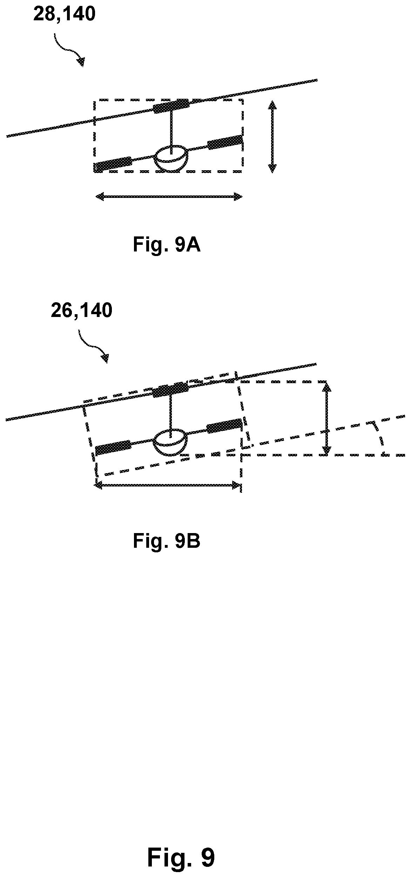

In figure 8 one embodiment of annotation (24) using the computer-implemented annotation tool (160) is illustrated. The annotation may subsequently be used for intelligent augmentation (140). In figure 8A an object (70) on the training image (66) is annotated (24) using area-selection. The exemplary object is a vibration absorber. In figure 8B rotated area-selection is used. The rotated area-selection may subsequently be used for intelligent augmentation as illustrated in figure 9. The rotated annotation in figure 8B may provide for a more accurate object classification.

Figure 9 illustrates an embodiment of intelligent data augmentation. In figure 9A the object is annotated using area-selection and in figure 9B pixel-segmentation is used for annotating the object. In both cases intelligent augmentation (140) is performed by extracting information of the dimensions and by rotation of the object. In the illustrated embodiment a width, length and rotation of the object is extracted. Relating information of dimensions and rotation may be used for scaling the images for more accurate object detection. Furthermore, this may be used when converting from pixel-segmentation to area-selected annotation or marking.

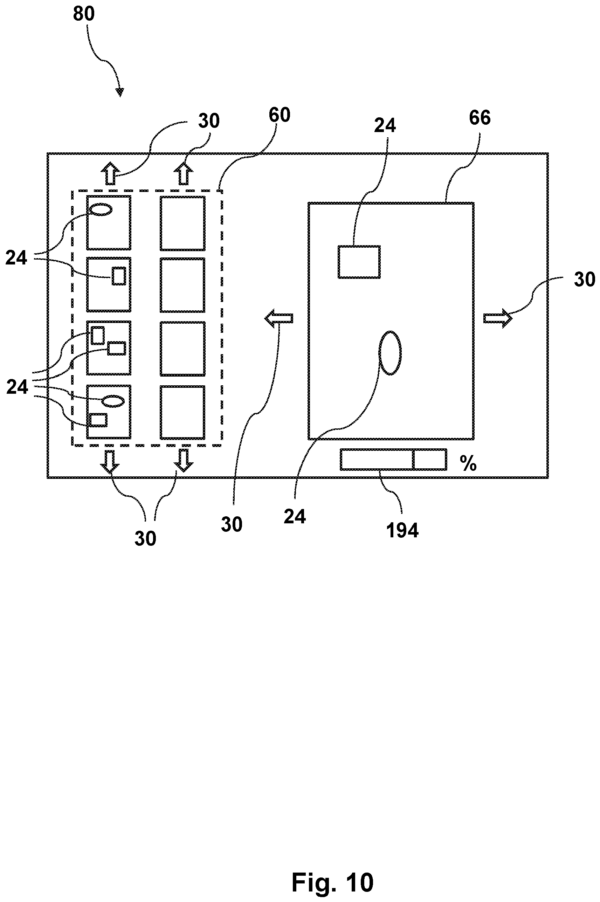

In figure 10 one embodiment of the computer-implemented navigation tool is illustrated. The illustration shows the graphical navigation tool as displayed GUI (80). The GUI (80) may be divided into several sections: One section, where the current training image (66) with annotations (24) is displayed and provided with forward and backward navigation (30) between the training images (66), another section, here illustrated below the training image (66), may display the status (194) on progression (196) of evaluating the image training batch. The status may display how many of the training images (66) of the image training batch annotation and object classification has been performed. The status may be displayed in percentage, as the current image number vs total amount of images, or in other appropriate measures. Yet another section may display two rows of images comprising the image training batch (60), where one row shows previous training images on which, annotation (24) and classification have been performed, thus this row shows the annotation history. The other row may show the subsequent training images, which has not yet been subject to annotation (24) and object classification. Both rows may be provided with forward and backward navigation (30) between the training images (66). Each row can be displayed alone or together.

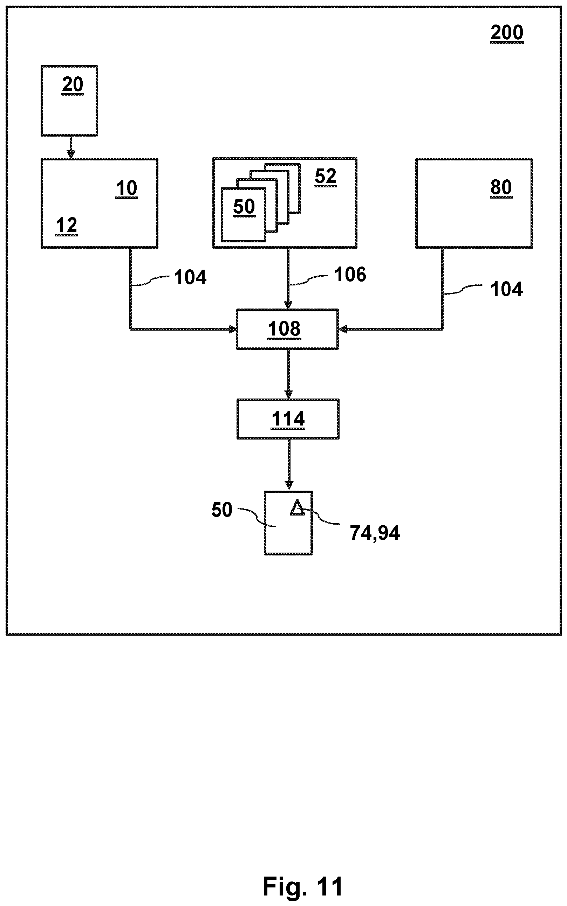

Figure 11 illustrates one embodiment of the computer-implemented method (200) in a neural network (10) for object detection in an unprocessed image (50) with probability of object detection. The method comprises the acts of providing (104) a neural network (10) configured with a set of specifications (12) and a graphical user interface (GUI) (80). Furthermore, an act of establishing (106) at least one unprocessed image batch (52) is comprised in the method.

The unprocessed image batch (52) may comprise at least one unprocessed image (50) to be subject for object detection. The neural network (10) is provided with a constructed model (20) with trained collective model variables and the GUI (80) is configured for displaying one or more unprocessed images (50) with a set of marked objects (74) and associated object classes (90).

Hereafter, the method comprises the further acts of performing (108) object detection in an unprocessed image and returning (114) the unprocessed image (50) with a set of marked objects (74) and machine classified objects (94).

## Claims

1. A computer-implemented method (100) for constructing (102) a model (20) in a neural network (10) for object detection (40) in an unprocessed image (50), the construction (102) being performed based on at least one image training batch (60), the method comprising acts of:
- Providing (104) a neural network (10) configured with a set of specifications (12);
- Establishing (106) at least one image training batch (60), which batch (60) comprises at least one training image (66) comprising one or more objects (70) where an individual object (70) is a member of an object class (90);
- Providing (104) a graphical user interface (GUI) (80) configured for displaying a training image (66) from the image training batch (60); and
- Iteratively performing (108) following acts:
o Annotating (110) object(s) (70) in the training image (66) by user interaction (82) generating individually annotated object(s) (72);
o Associating (112) an annotation (24) with an object class (90) for the annotated object (72) in the training image (66) by user interaction (82);
o Returning (114) a user annotated image training dataset (62) comprising the training image (66) with annotated object(s) (72), each individual annotated object (72) associated with an object class (90); and
o Constructing (102) a model (20) by training (116) one or more collective model variables (14) in the neural network (10) to classify (118) the individual annotated object(s) (72) as a member of an object class (90),
which model (20) in combination with the set of specifications (12) when implemented in a neural network (10) is capable of object detection (40) in an unprocessed image (50) with a certain probability (42) of object detection (40), **characterised by** the method comprising a further act of performing intelligent augmentation (140), said intelligent augmentation (140) comprises acts of processing multiple annotated objects (72) in a training image (66) and awarding each resulting augmented annotated object (72) a weighting for a certain probability of occurrence.

2. A computer-implemented method (100) according to claim 1 comprising a further act of iteratively performing (108) following acts:
∘ Displaying (120) a training image (66) comprising one or more machine marked objects (74) associated with a machine performed classification (94) of the one or more individual objects (70);
∘ Changing (130) the machine object marking (122), the machine object classification (118) or both; and
∘ Evaluating (124) the level of training (116) of the collective model variables (14) for terminating (126) the training (116) of the model (20).

3. A computer-implemented method (100) according to any of the preceding claims wherein the acts of annotating (110), associating (112) and returning (114) are performed (108) iteratively before subsequently performing (108) the act of constructing (102).

4. A computer-implemented method (100) according to any of the preceding claims comprising a further act of establishing (106) at least one image verification batch (68) for testing the constructed model (20) with a subsequent constructed model (20) constructed after further training by comparing the certainty of probability (42) of object detection (40) reached with said two constructed models (20).

5. A computer-implemented method (100) according to any of the preceding claims comprising a further act of using an accuracy (43) by which the object detection (40) is performed for evaluating (124) the constructed model's (20) accuracy (43) of object detection (40) and for evaluating the use of a reduced (128) image training batch (60).

6. A computer-implemented method (100) according to any of the preceding claims wherein annotating (110) an object (70) is performed by an area-selection (28) of the training image (66) comprising the object (70) or pixel-segmentation (26) of the object (70).

7. A computer-implemented method (100) according to any of the preceding claims wherein annotating (110) an object (70) is performed using a computer-implemented annotation tool (160) configured with a zoom-function (162) for:
- Providing (104) an area-selection interface (164) for area-selection (28) of an object (70) in the training image (66) by user interaction (82), which area-selection (28) is adjustable (166);
- Providing (104) a pixel-segmentation interface (168) for pixel-segmentation (26) of an object (70) in the training image (66) by user interaction (82), which pixel-segmentation (26) is configured to pre-segment (170) pixels (172) by grouping pixels (172) similar to a small selection of pixels (172) chosen by user interaction (82); or
- both,
which annotation tool (160) is configured to transform annotation (24) from pixel-segmentation (26) of an object (70) into area-selection (28) of the object (70) in the training image (66).

8. A computer-implemented method (100) according to claim 7 wherein the computer-implemented annotation tool (160) further provides for:
- colour overlay annotation (174), which colour is associated with an object classification (90) and which object classification (90) is associated with the annotation (24);
- re-classification (96) of one or more individual annotated objects (72), machine marked objects (74) or a combination of both; or
- both,
which annotation tool (160) is configured to show all annotations (24) and machine marks (22) associated with an object class (90) in one or more training images (66).

9. A computer-implemented method (100) according to claim 7 or 8 wherein the computer-implemented annotation tool (160) further provides for history (180) of the performed annotation (24).

10. A computer-implemented method (100) according to any of the preceding claims wherein navigation (30) in the image training batch (60) is performed using a computer-implemented navigation tool (190) providing for:
- navigation (30) by image management (192); and
- status (194) on progression (196) of evaluating the image training batch (60).

11. A computer-implemented method (200) in a neural network (10) for object detection (40) in an unprocessed image (50) with a certain probability (42) of object detection (40) comprising acts of:
- Providing (104) a constructed model (20) according to the method of any of claims 1-10 to a neural network (10) configured with a set of specifications (12);
- Establishing (106) at least one unprocessed image batch (52), which batch (52) comprises at least one unprocessed image (50) to be subject for object detection (40);
- Providing (104) a graphical user interface (GUI) (80) configured for displaying one or more unprocessed images (50) with a set of marked objects (74), each individual marked object (74) associated with an object class (90);
- Performing (108) object detection (40) in an unprocessed image (50); and
- Returning (114) the unprocessed image (50) with a set of marked objects (74), each individual marked object (74) associated with an object class (90).

12. A computer-implemented method (200) according to claim 11 comprising a further act of providing (104) access to a neural network (10) for further training (116) one or more collective model variables (14) of the model (20), such that the model (20) is subject to improved accuracy (43) of object detection (40).

13. Use of a computer-implemented method (100) for constructing (102) a model (20) in a neural network (10) according to any of claim 1 to 10 or a computer-implemented method (200) in a neural network (10) for object detection (40) according to claim 11 or 12, wherein at least one image training batch (60) or an unprocessed image (50) is collected by use of an airborne vehicle such as a drone.

## Patentansprüche

1. Computerimplementiertes Verfahren (100) zum Konstruieren (102) eines Modells (20) in einem neuronalen Netz (10) zur Objekterfassung (40) in einem unbearbeiteten Bild (50), wobei die Konstruktion (102) auf mindestens einer Bildtrainingsreihe (60) basiert, wobei das Verfahren folgende Handlungen umfasst:
- Bereitstellen (104) eines neuronalen Netzes (10), das mit einem Satz von Spezifikationen (12) konfiguriert ist;
- Erstellen (106) mindestens einer Bildtrainingsreihe (60), wobei die Reihe (60) mindestens ein Trainingsbild (66) umfasst, das ein oder mehrere Objekte (70) umfasst, wobei ein einzelnes Objekt (70) ein Element einer Objektklasse ist (90);
- Bereitstellen (104) einer grafischen Benutzerschnittstelle (GUI) (80), die zum Anzeigen eines Trainingsbildes (66) aus der Bildtrainingsreihe (60) konfiguriert ist; und
- Iteratives Durchführen (108) der folgenden Handlungen:
o Beschriften (110) eines Objekts/von Objekten (70) in dem Trainingsbild (66) durch Benutzerinteraktion (82), wodurch ein einzeln beschriftetes Objekt/einzeln beschriftete Objekte (72) generiert wird/werden;
o Zuordnen (112) einer Beschriftung (24) zu einer Objektklasse (90) für das beschriftete Objekt (72) in dem Trainingsbild (66) durch Benutzerinteraktion (82);
∘ Zurückgeben (114) eines von dem Benutzer beschrifteten Bildtrainingsdatensatzes (62), der das Trainingsbild (66) mit einem beschrifteten Objekt/beschrifteten Objekten (72) umfasst, wobei jedes einzelne beschriftete Objekt (72) einer Objektklasse (90) zugeordnet ist; und
∘ Konstruieren (102) eines Modells (20) durch Trainieren (116) einer oder mehrerer kollektiver Modellvariablen (14) in dem neuronalen Netz (10), um das/die individuell beschriftete(n) Objekt(e) (72) als Element einer Objektklasse (90) zu klassifizieren (118),
wobei das Modell (20) in Kombination mit dem Satz von Spezifikationen (12), wenn es in einem neuronalen Netz (10) implementiert ist, zu einer Objekterfassung (40) in einem unverarbeiteten Bild (50) mit einer gewissen Probabilität (42) der Objekterfassung (40) in der Lage ist, **dadurch gekennzeichnet, dass** das Verfahren eine weitere Handlung des Durchführens einer intelligenten Erweiterung (140) umfasst, wobei die intelligente Erweiterung (140) Handlungen des Verarbeitens mehrerer beschrifteter Objekte (72) in einem Trainingsbild (66) und des Zuweisens einer Gewichtung für eine gewisse Eintrittsprobabilität zu jedem resultierenden erweiterten beschrifteten Objekt (72) umfasst.

2. Computerimplementiertes Verfahren (100) nach Anspruch 1, umfassend eine weitere Handlung des iterativen Durchführens (108) der folgenden Handlungen:
∘ Anzeigen (120) eines Trainingsbildes (66), das ein oder mehrere maschinell markierte Objekte (74) umfasst, die einer maschinell durchgeführten Klassifizierung (94) des einen oder der mehreren einzelnen Objekte (70) zugeordnet sind;
∘ Ändern (130) der Maschinenobjektmarkierung (122), der Maschinenobjektklassifizierung (118) oder beider; und
∘ Auswerten (124) des Trainingsniveaus (116) der kollektiven Modellvariablen (14) zum Beenden (126) des Trainings (116) des Modells (20).

3. Computerimplementiertes Verfahren (100) nach einem der vorhergehenden Ansprüche, wobei die Handlungen des Beschriftens (110), des Zuordnens (112) und des Zurückgebens (114) iterativ durchgeführt (108) werden, bevor anschließend die Handlung des Konstruierens (102) durchgeführt wird (108).

4. Computerimplementiertes Verfahren (100) nach einem der vorangehenden Ansprüche, umfassend einen weiteren Handlung des Erstellens (106) mindestens einer Bildverifizierungsreihe (68) zum Testen des konstruierten Modells (20) mit einem nachfolgend konstruierten Modell (20), das nach weiterem Training durch Vergleichen der mit den zwei konstruierten Modellen (20) erreichten Gewissheit der Probabilität (42) der Objekterfassung (40) konstruiert wird.

5. Computerimplementiertes Verfahren (100) nach einem der vorhergehenden Ansprüche, umfassend eine weitere Handlung des Verwendens einer Genauigkeit (43), durch welche die Objekterfassung (40) durchgeführt wird, zum Auswerten (124) der Genauigkeit (43) der Objekterfassung (40) des konstruierten Modells (20) und zum Auswerten der Verwendung einer reduzierten (128) Bildtrainingsreihe (60).

6. Computerimplementiertes Verfahren (100) nach einem der vorhergehenden Ansprüche, wobei das Beschriften (110) eines Objekts (70) durch eine Bereichsauswahl (28) des Trainingsbilds (66), welches das Objekt (70) oder eine Pixelsegmentierung (26) des Objekts (70) umfasst, durchgeführt wird.

7. Computerimplementiertes Verfahren (100) nach einem der vorhergehenden Ansprüche, wobei das Beschriften (110) eines Objekts (70) unter Verwendung eines computerimplementierten Beschriftungswerkzeugs (160) durchgeführt wird, das mit einer Zoomfunktion (162) zu Folgendem konfiguriert ist:
- Bereitstellen (104) einer Bereichsauswahlschnittstelle (164) zur Bereichsauswahl (28) eines Objekts (70) in dem Trainingsbild (66) durch Benutzerinteraktion (82), wobei die Bereichsauswahl (28) einstellbar ist (166);
- Bereitstellen (104) einer Pixelsegmentierungsschnittstelle (168) zur Pixelsegmentierung (26) eines Objekts (70) in dem Trainingsbild (66) durch Benutzerinteraktion (82), wobei die Pixelsegmentierung (26) dazu konfiguriert ist, Pixel (172) ähnlich einer kleinen Auswahl von Pixeln (172), die durch Benutzerinteraktion (82) ausgewählt ist, durch Gruppieren von Pixeln (172) vorzusegmentieren (170); oder
- beidem,
wobei das Beschriftungswerkzeug (160) dazu konfiguriert ist, eine Beschriftung (24) von einer Pixelsegmentierung (26) eines Objekts (70) in eine Bereichsauswahl (28) des Objekts (70) in dem Trainingsbild (66) umzuwandeln.

8. Computerimplementiertes Verfahren (100) nach Anspruch 7, wobei das computerimplementierte Beschriftungswerkzeug (160) ferner Folgendes bereitstellt:
- eine Farbüberlagerungsbeschriftung (174), wobei die Farbe einer Objektklassifizierung (90) zugeordnet ist und wobei die Objektklassifizierung (90) der Beschriftung (24) zugeordnet ist;
- eine Neuklassifizierung (96) von einem oder mehreren einzelnen beschrifteten Objekten (72), maschinell markierten Objekten (74) oder einer Kombination aus beiden; oder
- beides,
wobei das Beschriftungswerkzeug (160) dazu konfiguriert ist, alle Beschriftungen (24) und Maschinenmarkierungen (22), die einer Objektklasse (90) zugeordnet sind, in einem oder mehreren Trainingsbildern (66) zu zeigen.

9. Computerimplementiertes Verfahren (100) nach Anspruch 7 oder 8, wobei das computerimplementierte Beschriftungswerkzeug (160) ferner einen Verlauf (180) der durchgeführten Beschriftung (24) bereitstellt.

10. Computerimplementiertes Verfahren (100) nach einem der vorhergehenden Ansprüche, wobei die Navigation (30) in der Bildtrainingsreihe (60) unter Verwendung eines computerimplementierten Navigationstools (190) durchgeführt wird, das Folgendes bereitstellt:
- eine Navigation (30) durch Bildverwaltung (192); und
- einen Status (194) beim Fortschreiten (196) der Auswertung der Bildtrainingsreihe (60).

11. Computerimplementiertes Verfahren (200) in einem neuronalen Netz (10) zur Objekterfassung (40) in einem unverarbeiteten Bild (50) mit einer gewissen Probabilität (42) der Objekterfassung (40), umfassend folgende Handlungen:
- Bereitstellen (104) eines konstruierten Modells (20) gemäß dem Verfahren nach einem der Ansprüche 1-10 für ein neuronales Netz (10), das mit einem Satz von Spezifikationen (12) konfiguriert ist;
- Erstellen (106) mindestens einer unverarbeiteten Bildreihe (52), wobei die Reihe (52) mindestens ein unverarbeitetes Bild (50) umfasst, das Gegenstand der Objekterfassung (40) ist;
- Bereitstellen (104) einer grafischen Benutzeroberfläche (GUI) (80), die zum Anzeigen eines oder mehrerer unverarbeiteter Bilder (50) mit einem Satz markierter Objekte (74) konfiguriert ist, wobei jedes einzelne markierte Objekt (74) einer Objektklasse (90) zugeordnet ist;
- Durchführen (108) einer Objekterfassung (40) in einem unverarbeiteten Bild (50); und
- Zurückgeben (114) des unverarbeiteten Bildes (50) mit einem Satz von markierten Objekten (74), wobei jedes einzelne markierte Objekt (74) einer Objektklasse (90) zugeordnet ist.

12. Computerimplementiertes Verfahren (200) nach Anspruch 11, umfassend eine weitere Handlung des Bereitstellens (104) eines Zugriffs auf ein neuronales Netz (10) zum weiteren Trainieren (116) einer oder mehrerer kollektiver Modellvariablen (14) des Modells (20), sodass das Modell (20) einer verbesserten Genauigkeit (43) der Objekterfassung (40) unterliegt.

13. Verwendung eines computerimplementierten Verfahrens (100) zum Konstruieren (102) eines Modells (20) in einem neuronalen Netz (10) nach einem der Ansprüche 1 bis 10 oder eines computerimplementierten Verfahrens (200) in einem neuronalen Netz (10) zur Objekterfassung (40) nach Anspruch 11 oder 12, wobei mindestens eine Bildtrainingsreihe (60) oder ein unverarbeitetes Bild (50) durch Verwendung eines Luftfahrzeugs, wie etwa einer Drohne, gesammelt wird.

## Revendications

1. Procédé mis en œuvre par ordinateur (100) pour construire (102) un modèle (20) dans un réseau neuronal (10) pour détection d'objets (40) dans une image non traitée (50), la construction (102) étant réalisée sur la base d'au moins un lot d'apprentissage d'images (60), le procédé comprenant les actions consistant à :
- fournir (104) un réseau neuronal (10) configuré avec un ensemble de spécifications (12) ;
- établir (106) au moins un lot d'apprentissage d'images (60), lequel lot (60) comprend au moins une image d'apprentissage (66) comprenant un ou plusieurs objets (70) où un objet individuel (70) est un membre d'une classe d'objets (90) ;
- fournir (104) une interface utilisateur graphique (GUI) (80) configurée pour afficher une image d'apprentissage (66) à partir du lot d'apprentissage d'images (60) ; et
- exécuter itérativement (108) les actions suivantes :
∘ l'annotation (110) du ou des objets (70) dans l'image d'apprentissage (66) par interaction de l'utilisateur (82) générant un ou des objets annotés individuellement (72) ;
∘ l'association (112) d'une annotation (24) à une classe d'objets (90) pour l'objet annoté (72) dans l'image d'apprentissage (66) par interaction de l'utilisateur (82) ;
∘ le retour (114) d'un ensemble de données d'apprentissage d'images annotées par l'utilisateur (62) comprenant l'image d'apprentissage (66) avec un ou des objets annotés (72), chaque objet annoté individuel (72) étant associé à une classe d'objets (90) ; et
∘ la construction (102) d'un modèle (20) en entraînant (116) une ou plusieurs variables de modèle collectif (14) dans le réseau neuronal (10) pour classer (118) le ou les objets annotés individuels (72) en tant que membre d'une classe d'objets (90),
lequel modèle (20) en combinaison avec l'ensemble de spécifications (12) lorsqu'il est mis en œuvre dans un réseau neuronal (10) est capable de détection d'objets (40) dans une image non traitée (50) avec une certaine probabilité (42) de détection d'objets (40), **caractérisé par** le procédé comprenant une action supplémentaire de réalisation d'une augmentation intelligente (140), ladite augmentation intelligente (140) comprend des actions de traitement de plusieurs objets annotés (72) dans une image d'apprentissage (66) et d'attribution à chaque objet annoté augmenté résultant (72) d'une pondération pour une certaine probabilité d'occurrence.

2. Procédé mis en œuvre par ordinateur (100) selon la revendication 1, comprenant une action supplémentaire de réalisation itérative (108) des actions suivantes :
∘ l'affichage (120) d'une image d'apprentissage (66) comprenant un ou plusieurs objets marqués par machine (74) associés à une classification réalisée par machine (94) du ou des objets individuels (70) ;
∘ la modification (130) du marquage d'objet machine (122), la classification d'objet machine (118) ou les deux ; et
∘ l'évaluation (124) du niveau d'apprentissage (116) des variables de modèle collectif (14) pour achever (126) l'apprentissage (116) du modèle (20).

3. Procédé mis en œuvre par ordinateur (100) selon l'une quelconque des revendications précédentes, dans lequel les actions d'annotation (110), d'association (112) et de retour (114) sont réalisées (108) de manière itérative avant de réaliser par la suite (108) l'action de construction (102).

4. Procédé mis en œuvre par ordinateur (100) selon l'une quelconque des revendications précédentes, comprenant une action supplémentaire d'établissement (106) d'au moins un lot de vérification d'images (68) pour tester le modèle construit (20) avec un modèle construit ultérieur (20) construit après un apprentissage ultérieur en comparant la certitude de probabilité (42) de détection d'objets (40) atteinte avec lesdits deux modèles construits (20).

5. Procédé mis en œuvre par ordinateur (100) selon l'une quelconque des revendications précédentes comprenant une action supplémentaire d'utilisation d'une précision (43) par laquelle la détection d'objets (40) est réalisée pour évaluer (124) la précision (43) du modèle construit (20) de détection d'objets (40) et pour évaluer l'utilisation d'un lot d'apprentissage d'images (60) réduit (128).

6. Procédé mis en œuvre par ordinateur (100) selon l'une quelconque des revendications précédentes, dans lequel l'annotation (110) d'un objet (70) est réalisée par une sélection de zone (28) de l'image d'apprentissage (66) comprenant l'objet (70) ou la segmentation en pixels (26) de l'objet (70).

7. Procédé mis en œuvre par ordinateur (100) selon l'une quelconque des revendications précédentes, dans lequel l'annotation (110) d'un objet (70) est réalisée à l'aide d'un outil d'annotation mis en œuvre par ordinateur (160) configuré avec une fonction de zoom (162) afin de :
- fournir (104) une interface de sélection de zone (164) pour la sélection de zone (28) d'un objet (70) dans l'image d'apprentissage (66) par interaction de l'utilisateur (82), laquelle sélection de zone (28) est réglable (166) ;
- fournir (104) une interface de segmentation en pixels (168) pour la segmentation en pixels (26) d'un objet (70) dans l'image d'apprentissage (66) par interaction de l'utilisateur (82), laquelle segmentation de pixels (26) est configurée pour pré-segmenter (170) les pixels (172) en regroupant les pixels (172) comme une petite sélection de pixels (172) choisis par interaction de l'utilisateur (82) ; ou
- les deux,
lequel outil d'annotation (160) est configuré pour transformer l'annotation (24) de la segmentation en pixels (26) d'un objet (70) en une sélection de zone (28) de l'objet (70) dans l'image d'apprentissage (66).

8. Procédé mis en œuvre par ordinateur (100) selon la revendication 7, dans lequel l'outil d'annotation mis en œuvre par ordinateur (160) fournit en outre :
- une annotation de superposition de couleur (174), laquelle couleur est associée à une classification d'objets (90) et laquelle classification d'objets (90) est associée à l'annotation (24) ;
- une reclassification (96) d'un ou de plusieurs objets annotés individuels (72), d'objets marqués par machine (74) ou d'une combinaison des deux ; ou
- les deux,
lequel outil d'annotation (160) est configuré pour afficher toutes les annotations (24) et les marques de machine (22) associées à une classe d'objets (90) dans une ou plusieurs images d'apprentissage (66).

9. Procédé mis en œuvre par ordinateur (100) selon la revendication 7 ou 8, dans lequel l'outil d'annotation mis en œuvre par ordinateur (160) fournit en outre un historique (180) de l'annotation réalisée (24).

10. Procédé mis en œuvre par ordinateur (100) selon l'une quelconque des revendications précédentes, dans lequel la navigation (30) dans le lot d'apprentissage d'images (60) est réalisée à l'aide d'un outil de navigation mis en œuvre par ordinateur (190) permettant :
- la navigation (30) par gestion d'image (192) ; et
- le suivi de l'état (194) sur la progression (196) de l'évaluation du lot d'apprentissage d'images (60).

11. Procédé mis en œuvre par ordinateur (200) dans un réseau neuronal (10) pour détection d'objets (40) dans une image non traitée (50) avec une certaine probabilité (42) de détection d'objets (40) comprenant les actions :
- de fourniture (104) d'un modèle construit (20) selon le procédé selon l'une quelconque des revendications 1 à 10 à un réseau neuronal (10) configuré avec un ensemble de spécifications (12) ;
- d'établissement (106) d'au moins un lot d'images non traitées (52), lequel lot (52) comprend au moins une image non traitée (50) à soumettre à la détection d'objets (40) ;
- de fourniture (104) d'une interface utilisateur graphique (GUI) (80) configurée pour afficher une ou plusieurs images non traitées (50) avec un ensemble d'objets marqués (74), chaque objet marqué individuel (74) étant associé à une classe d'objets (90) ;
- la réalisation (108) d'une détection d'objets (40) dans une image non traitée (50) ; et
- le retour (114) de l'image non traitée (50) avec un ensemble d'objets marqués (74), chaque objet marqué individuel (74) étant associé à une classe d'objets (90).

12. Procédé mis en œuvre par ordinateur (200) selon la revendication 11, comprenant une action supplémentaire consistant à fournir (104) un accès à un réseau neuronal (10) pour un apprentissage supplémentaire (116) d'une ou de plusieurs variables de modèle collectif (14) du modèle (20), de sorte que le modèle (20) est soumis à une précision améliorée (43) de détection d'objets (40).

13. Utilisation d'un procédé mis en œuvre par ordinateur (100) pour la construction (102) d'un modèle (20) dans un réseau neuronal (10) selon une quelconque revendication 1 à 10 ou d'un procédé mis en œuvre par ordinateur (200) dans un réseau neuronal (10) pour détection d'objets (40) selon la revendication 11 ou 12, dans lequel au moins un lot d'apprentissage d'images (60) ou une image non traitée (50) est collecté (e) à l'aide d'un véhicule aéroporté tel qu'un drone.
